# EUROPÄISCHE PATENTANMELDUNG

(11) **EP 2 735 734 A2**
(43) Veröffentlichungstag der Anmeldung: **28.05.2014**
(21) Anmeldenummer: 13194604.8
(22) Anmeldetag: 27.11.2013
(51) Int. Cl.: F03D 3/06, F03D 5/02

(54) **Windkraftmaschine mit vertikalstehenden Flügeln**

(30) Priorität: 27.11.2012 AT 12442012
(71) Anmelder: Bräuer, Franz, 4482 Ennsdorf bei Enns (AT)
(72) Erfinder: Bräuer, Franz, 4482 Ennsdorf bei Enns (AT)
(74) Vertreter: Itze, Peter

(57) **Zusammenfassung**

Die Erfindung betrifft eine Windkraftmaschine mit vertikal stehenden Flügeln (27) und einem im Boden verankerten Sockel, an dem ein Basisaufbau (6) um eine vertikale Achse drehbar und dem Wind nachführbar gelagert ist, wobei an der Oberseite des Basisaufbaus (6) zwei Umlenkscheiben (24) für ein flexibles Zugorgan (23) angebracht sind und wobei parallel zum Basisaufbau (6) ein spiegelbildlich aufgebauter Deckaufbau (17), ebenfalls mit Umlenkscheiben (24) und Zugorgan (23), angeordnet ist, und wobei zwischen den Zugorganen (23) und mit diesen verbunden, um vertikale Achsen verstellbare Windflügel (27) vorgesehen sind, wobei die Winkelstellung jedes Windflügels (27) über in Führungsschienen (47, 49) bewegte Führungsgleiter (45) gesteuert ist. Zwecks Vermeidung von Führungsschienen zwischen den Umlenkscheiden sind die Windflügel (27) bezüglich ihrer Winkelstellung im Bereich der geraden Erstreckung der Zugorgane (23) zwischen den Umlenkscheiben (24) durch einen über die Führungsgleiter (45) gesteuerten Arretierungsmechanismus fixiert und im Bereich der Umlenkscheiben (24) verstellbar.

## Beschreibung

Zurzeit werden fast nur die dreiflügelige Rotor-Windkraftanlagen gebaut.
Bei den verschiedenen Darrieus Rotor-Systemen, wird derzeit viel versucht und geforscht, jedoch kommen diese Systeme nicht an die Effizient, der dreiflügeligen Rotor-Windkraftanlagen heran. Es wurden daher auch schon wieder einige Projekte eingestellt. Erwähnenswert sind noch das Westernwindrad, Savonius Turbinen und die seit dem Altertum bestehenden Windmühlen, mit horizontaler oder vertikaler Achsenstellung.
Einige patentierte Ideen gibt es auch noch, aber die bestehen nur auf Papier oder als Prototyp in Kleinformat. Das sind Aufwind- Fallwind- und Hubflügelkraftwerke, sowie Fliegende- und Höhenwindenergieanlagen, um einige zu nennen.

Die Erfindung bezieht sich auf eine Windkraftmaschine mit vertikalstehenden Flügeln und einem im Boden verankerten Sockel, an dem ein Basisaufbau um eine vertikale Achse drehbar und dem Wind nachführbar gelagert ist, wobei an der Oberseite des Basisaufbaus zwei Umlenkscheiben für ein flexibles Zugorgan angebracht sind und wobei parallel zum Basisaufbau ein spiegelbildlich aufgebauter Deckaufbau ebenfalls mit Umlenkscheiben und Zugorgan angeordnet ist, und wobei zwischen den Zugorganen und mit diesen verbunden, um vertikale Achsen verstellbare Windflügel vorgesehen sind, wobei die Winkelstellung jedes Windflügels in Führungsschienen bewegte Führungsgleiter gesteuert ist.

Eine derartige Ausbildung geht aus der CN 202181988 U hervor. Bei dieser bekannten Ausbildung ist impliziert eine Führungseinrichtung für die Windflügel vorgesehen da dargestellt ist, dass die Windflügel während des Umlaufes an der Außenseite also der im Wind arbeitenden Seite ausgestellt und auf der die Windflügel rückführenden Seite eingeklappt sind, was durch entsprechende Führungsschiene gezeigt ist. Aus dieser Druckschrift geht allerdings nicht hervor wie die Steuerung der Windflügel über diese Führungsgleiter tatsächlich erfolgen soll, bzw. die das Umschalten zwischen nach außen gerichteter Stellung und eingeklappter Stellung erfolgen soll.

Eine ähnliche Ausbildung geht auch aus CN 102182637 A hervor. Über die Steuerung der Windflügel ist dieser Druckschrift nicht entnehmbar.

Die DE 2150204 A offenbart ebenfalls eine Windkraftmaschine der eingangs genannten Art, wobei auch aus dieser Druckschrift die Steuerung der Stellung der Windflügel nicht hervorgeht.

Die US 1526631 A offenbart ebenfalls eine Windkraftmaschine der eingangs genannten Art, wobei jedoch bei dieser Ausbildung die Stellung der Windflügel mittels Spreizhebel, welche auch die Stellung der Windflügel steuert einstellbar ist. Die Ausbildung ist dabei auf einer kreisrund verlaufenden Schiene angeordnet und entlang dieser der Windrichtung entsprechend einstellbar.

Der Erfindung liegt nun die Aufgabe zugrunde, eine Windkraftmaschine der eingangs genannten Art so auszubilden, dass die Winkelstellung der Flügel auf den gerade verlaufenden Teilen ohne Führungsschienen gewährleistet ist.

Erfindungsgemäß wird diese Aufgabe dadurch gelöst, dass zwischen den Umlenkscheiben durch einen über die Führungsgleise gesteuerten Arretiermechanismus die Windflügel fixiert und im Bereich der Umlenkscheibe verstellbar sind. Damit erübrigen sich in den geraden Bereichen zwischen den Umlenkrollen spezielle Führungseinrichtungen, da das Beibehalten der eingestellten Winkelstellung über den Arretiermechanismus sichergestellt ist.

Vorteilhafterweise kann jeder Arretierungsmechanismus jeweils ein an dem Zugorgan befestigtes Arretierungsgehäuse, einen in dem Arretierungsgehäuse fest angeordneten Zahnkranz, am Außenumfang des Arretierungsgehäuses fest angeordnete Räder, einen im Arretierungsgehäuse vertikal verschiebbaren Zahnkranz und ein im Arretierungsgehäuse vertikal verschiebbares Entriegelungsrohr mit nach außenstehenden Entriegelungsrädern aufweisen. Damit ist eine auch hohen Kräftenwiderstehende Ausführung geschaffen. Dabei kann zwischen dem Entriegelungsrohr und dem verschiebbaren Zahnkranzes ein Federpaket angeordnet sein, das den verschiebbaren Zahnkranz in Richtung zum feststehenden Zahnkranz beaufschlagt. Damit ist ein sicherer Eingriff der Verriegelungszahnräder gegeben. Im Bereich der Umlenkscheiben zwischen die fest angeordneten Räder und die verschiebbar angeordneten Entriegelungsräder in Eingriff bringbare Führungsorgane können vorgesehen sein, wobei dadurch die Entriegelungsräder im Sinne des außer Eingriff Bewegens des verschiebbaren Zahnkranzes verschoben werden, wodurch die Winkelstellung der nunmehr frei drehbaren Windflügel durch ein Zusammenwirken von Führungsgleitern und Führungsschienen veränderbar ist. Damit wird erreicht, dass die Verstellbewegung nur in jenen Bereichen, in denen die Führungsschienen vorgesehen sind, erfolgen kann, wogegen zwischen den Umlenkrollen eine Steuerverbindung zwischen Windflügeln und Antriebsorgan gegeben ist. Zum sicheren Fixieren der Windflügel können je Windflügel am unteren Ende und am oberen Ende ein Arretierungsmechanismus angeordnet sein, welche spiegelbildlich gegengleich ausgebildet sind. Damit sind die Windflügel in Ihrer Stellung sowohl am oberen als auch an der unteren Seite fixiert, womit eine einheitliche Stellung über die gesamte Höhe der Windflügel erzielt ist. Am unteren Ende der Windflügel kann zusätzlich noch ein Stützrad vorgesehen sein, das in einer U-Profil Schiene läuft. Damit ist einer unbeabsichtigten Verstellung der Windflügel vorgebeugt. Um bei starkem Wind ein Fixieren der Windflügel in einer dem Wind möglichst wenig Angriffsfläche entgegensetzenden Stellung zu ermöglichen können an allen vier Umlenkscheiben Scheibenbremsen vorgesehen sein. Weiters kann eine Sprühvorrichtung mit Düsen zum Besprühen der Windflügel z.B. mittels Frostschutzmittel vorgesehen sein, womit ähnlich wie bei den Tragflächen von Flugzeugen einer Vereisung der Windflügel vorgebeugt ist. Schließlich können an den Windflügel Spektralfarben erzeugende Bänder angebracht sein, um zu verhindern, dass Vögel bzw. ganze Vogelschwärme an die vertikal stehenden Windflügel anfliegen.

Die vorliegende Erfindung bringt somit eine weitere Variante ins Geschehen, der erneuerbaren Energien. Ein, in 20 bis 30 Meter Höhe befindlicher Kranz, mit Schiene ist vorgesehen. Diese Höhe ist notwendig um den Einfluss der Bodenturbulenzen zu verringern. Der Durchmesser des Kranzes kann zehn bis fünfzig Meter und mehr betragen. Darauf befindet sich ein drehbarer, zehn bis dreißig Meter hoher Gerüstaufbau. Im diesem befinden sich vorne und hinten sowie oben und unten, Umlenkscheiben, die mit Zugorgane oben und unten belegt sind. Die Zugorgane werden mit schwenkbaren Windflügeln, senkrecht von oben nach unten, bestückt. Vorne werden die Windflügel in den Wind gestellt und hinten dem Zugorgan nach ausgerichtet. Mit der Kraft des Windes werden ein oder zwei Generatoren angetrieben und diese liefern dann elektrische Energie.

Funktional: "Die in den Wind gestellten Windflügeln werden nach hinten gedrückt, dadurch bewegen sich auch die Zugorgane, an denen die Windflügel befestigt sind und somit auch die Umlenkscheiben. Diese treiben über die Antriebswellen Generatoren an, die Strom erzeugen".

In der Zeichnung ist ein Ausführungsbeispiel des Erfindungsgegenstandes dargestellt.

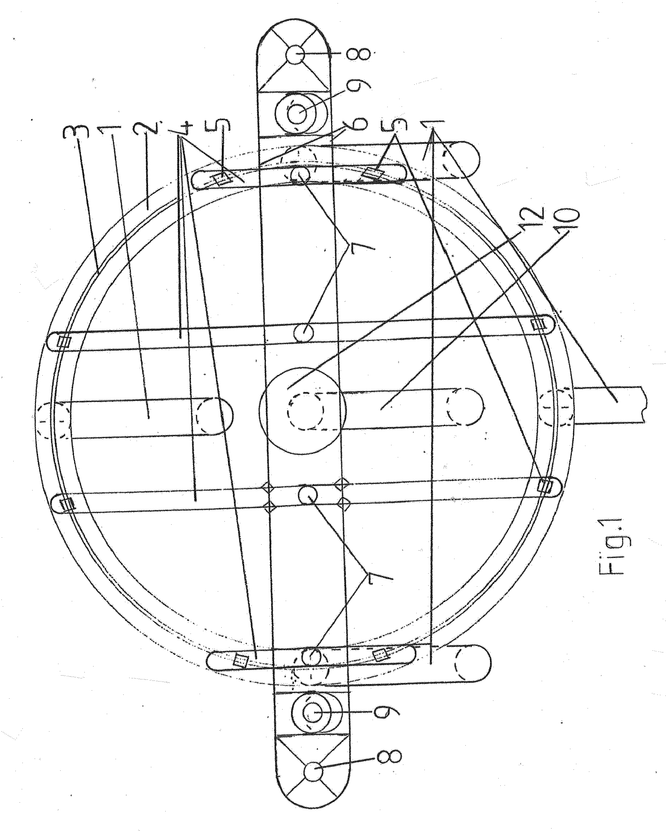

- Fig. 1: zeigt den Kranz mit Schiene auf vier Säulen. Auf der Schiene steht der untere Teil des Gerüstes mit seinen Rädern. Die Säule in der Mitte dient zum Drehen des Gerüstes.
- Fig. 2: zeigt den Drehmechanismus

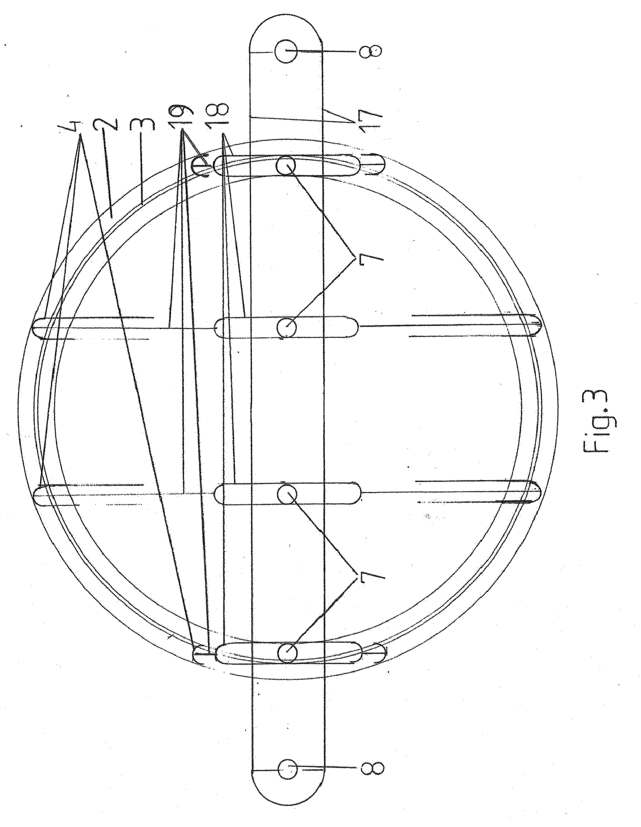

- Fig. 3: zeigt den Deckaufbau

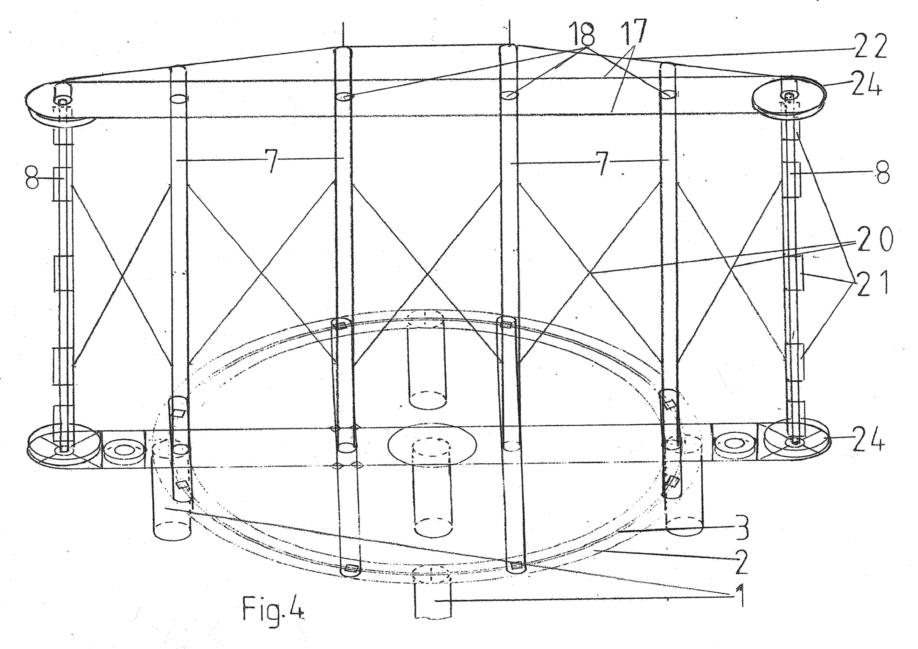

- Fig. 4: zeigt Grundaufbau mit Gerüst und Umlenkscheiben
- Fig. 5: zeigt Zugorgan auf Umlenkscheiben, bestückt mit Windflügel

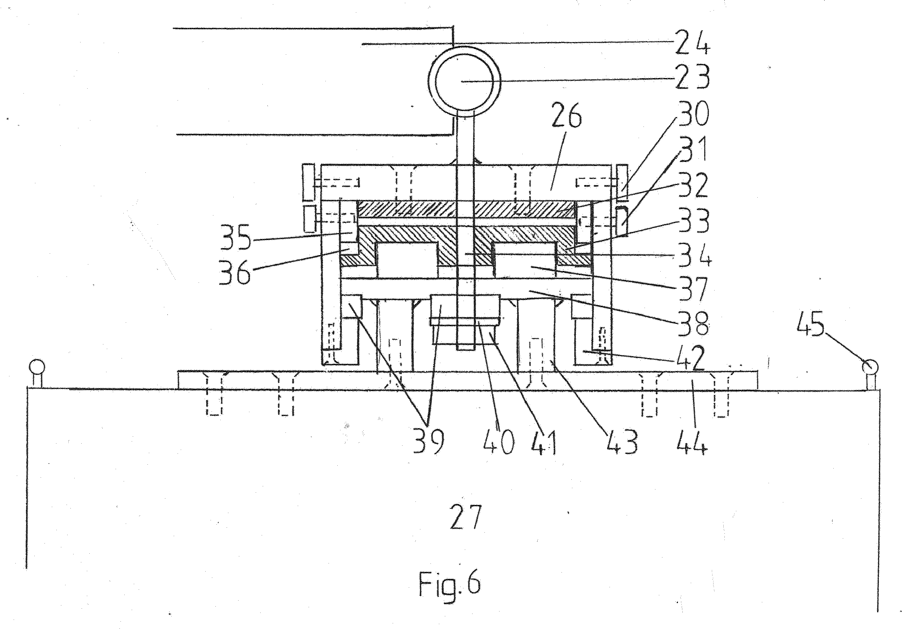

- Fig. 6: zeigt Arretierungsgehäuse mechanisch oben

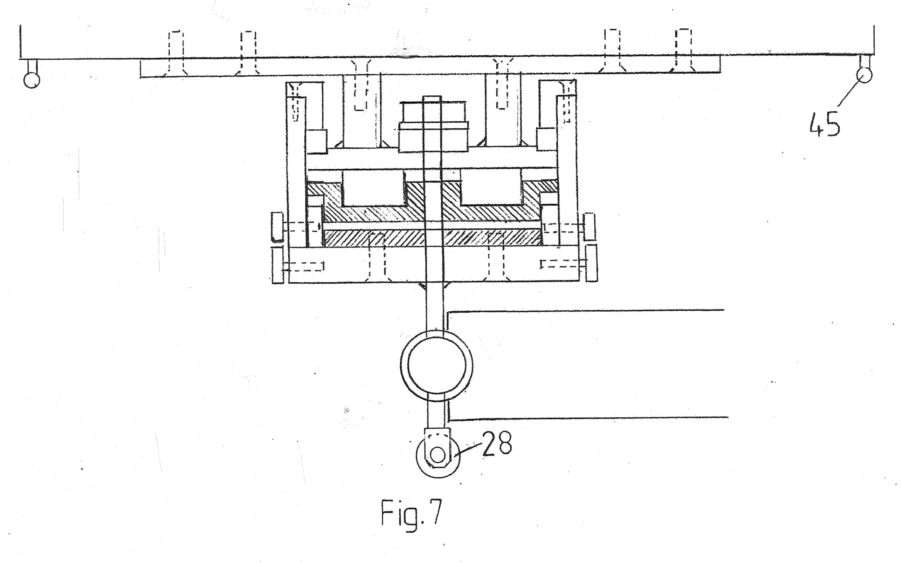

- Fig. 7: zeigt Arretierungsgehäuse mechanisch unten
- Fig. 8: zeigt Schaltschema und Stellung der Windflügel
- Fig. 9: zeigt eine Enteisungsanlage
- Fig. 10: zeigt einen Windflügel
- Fig. 11: zeigt einige mögliche Windflügelprofile von oben
- Fig. 12: zeigt Windflügel in den Wind gestellt
- Fig. 13: zeigt Windflügel auf der Rückseite im Lee.

Die Windkraftmaschine besteht aus einem in der Erde fest verankerten Grundaufbau. Er besteht aus vier Säulen 1, die in zwanzig bis dreißig Meter Höhe einen Kranz 2 mit Schiene oder Rohr in der Mitte 3 oben tragen. Die Menge der Säulen richtet sich nach der Größe des Kranzes. Auf der Schiene liegen die vier Auslegearme 4 mit den Auflagerädern 5. Darauf wird Rechtwinkelig der Basisaufbau 6 gelegt und fest verbunden. Der Basisaufbau 6 soll nicht mehr als ein Fünftel der Gesamtlänge, über den Kurzarm hinaus ragen. Die Auslegearme 4, der Basisaufbau 6 sowie der Deckaufbau 17 mit den Querarmen 18, sind Gitterkonstruktionen, jedoch hier sehr einfach dargestellt.

Der Basisaufbau 6 hat vier Löcher 7, darauf werden die Standsäulen gesetzt, die den Deckaufbau 17 tragen. Die zwei Außenlöcher 8 werden mit den Antriebswellen 8', auf denen oben und unten die Umlenkscheiben 24 sitzen, bestückt. Der Drehmechanismus sitzt auf der Mittesäule 10 mit Säulenaufsatz 11. Darüber liegt die Montageplatte 12, auf einem Axialrollenlager 13. Die außen abgewinkelte Montageplatte 12 trägt darunter ein Tellerrad 14. Unterhalb des Säulenaufsatzes sitzt ein Stellmotor 16 dessen Ritzel 15 in das Tellerrad 14 der Montageplatte 12 greift. Oben auf der Montageplatte 12 wird der Basisaufbau 6 fest mit ihr verbunden. Nach Beendigung der Drehbewegung tritt eine Verrieglung der Auslegearme 4 am Rohr 3 in Kraft. Der Deckaufbau 17 und die Querarme 18 sind wiederum Gitterkonstruktionen und fest mit einander verbunden. Die Querarme 18 sollten um die halbe Breite des Deckaufbaues 17 hinausragen. Der Deckaufbau 17 wird auf die Standsäulen 7 und Antriebswellen 8' aufgesetzt. Die Höhe richtet sich nach der Länge der Windflügel 27. Von den Querarmen 18 außen, gehen Spannseile 19 nach unten zu den Auslegearmen 4 außen. Die Verstrebungen 20 im Grundaufbau können noch mit zusätzlichen Streben oder Gitterkonstruktionen verstärkt werden. Rohrteile 21 sind für Montagehilfe und Schwingungsdämpfung der Antriebswelle 8' vorgesehen. 22 ist ein Blitzschutz mit Verspannung.

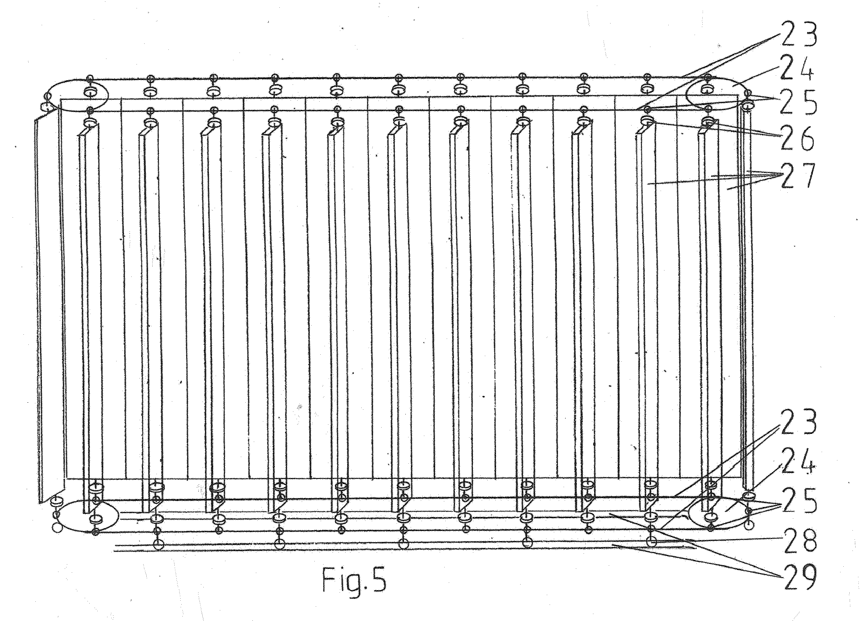

Fig. 5 zeigt den eigentlichen Windantrieb. Zwei Zugorgane 23, je eines oben und unten, sind in den Umlenkscheiben 24 eingehängt. Darauf werden senkrecht, von oberen nach unten, Windflügeln 27 montiert. Die Windflügeln 27 werden vorne so in den Wind gestellt, dass sie im rechten Winkel angeblasen werden. Hinten werden sie in Zugorganrichtung gereiht, sodass sie eine fast geschlossene Wand bilden. Der Verriegelungsmechanismus liegt in den Arretierungsgehäuse 26.

Das Verriegelungsgehäuse ist im wesentlichen topfförmig angeordnet, wobei am Außenumfang ein Radpaar 30,31 angeordnet ist, wobei die Achse des Rades 30 starr am Verriegelungsgehäuse 26 angeordnet ist, wogegen die Achse des zweiten Rades 32 quer zur Achsrichtung im Sinne eines Wegbewegens bzw. Heranbewegens an das Rad 30 in einem Langloch verschiebbar ist. Im Inneren des Verriegelungsgehäuses ist am Boden bzw. Decke desselben ein starrer Zahnkranz 32 vorgesehen, gegenüber welchem ein Zahnkranz 33 vorgesehen ist. Der bewegbare Zahnkranz 33 ist an einer zentralen Welle 34 vorgesehen und ist entlang dieser Welle durch die Bewegung des Rades 31 verstellbar. Für die Verstellung des bewegbaren Zahnkranzes 33 ist ein Entriegelungsrohr 35 vorgesehen, welches über Nadellager 36 an dem beweglichen Zahnkranz 33 angreift und bei Bewegung des Rades 31 den Zahnkranz 32 verstellt. Unterhalb des beweglichen Zahnkranzes 33 ist ein Federpaket 37 vorgesehen, dass sich an einer Montageplatte 38 abstützt. Diese Montageplatte 38 ist mittels Lager 39 geführt und mittels einer Scheibe - Mutterkombination 40, 41 festgesetzt. Mit 43 ist das Befestigungsrohr der Montageplatte 38 an einem Windflügelbalken 44 bezeichnet. Das Verriegelungsgehäuse 26 ist dabei mittels einer Büchse 42 an der Montageplatte 38 festgelegt.

Die Umlenkscheiben 24 werden, am Anfang sowie am Ende, durch eine senkrecht stehende Antriebswelle 8' miteinander verbunden und treiben, über Zahnräder oder einen Kardanantrieb, die Generatoren 9 an. Die Generatoren 9 könnten aber auch direkt, unterhalb der Umlenkscheiben 24, an die Antriebswelle 8' angekoppelt werden.
Das Arretierungsgehäuse 26 hat außen, links und rechts, je zwei Räder. Beim ersten 30 ist die Achse feststehend, beim zweiten 31 ist die Achse beweglich im Entriegelungsrohr 35 eingebaut und ist im Arretierungsgehäuse 26 in einem kurzen Schlitz nach unten geliefert. Werden zwischen den Rädern 30 und 31, links und rechts eine Führungsorgane 46 durchgezogen, so wird mit dem Rad 31, das Entriegelungsrohr 35, mit dem Nadellager 36, sowie der Zahnkranz 33 nach unten geschoben und dabei das Federpaket zusammen gedrückt. Nun ist der Windflügel 27 entriegelt und kann nun mit Hilfe der Führungsschiene 47 und Führungsgleiter 45 vorne verstellt werden. Sobald die Räder 30 und 31 die Führungsorgane verlassen, drück das Federpaket den Zahnkranz 33, Nadellager36, Entriegelungsrohr 35 und Räder 31 nach oben und der Windflügeln ist wieder verriegelt. Hinten wird der gleiche Vorgang durch die Führungsorgane 48 eingeleitet. Die unteren Arretierungsgehäuse 26, werden einfach umgedreht und haben an derselben Stelle wie oben die Schaltpunkte, nur haben sie unterhalb noch ein drehbar gelagertes Stützrad 28 montiert. Es läuft in einem U-Eisen, soll das Schaukeln einbremsen und das Gewicht für die Zugorgane entlasten.

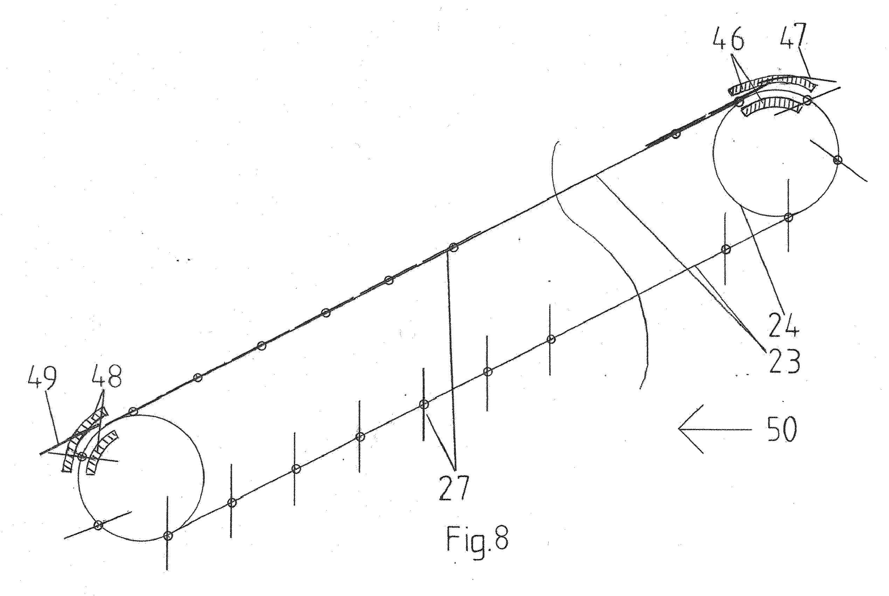

Fig. 8 zeigt die Stellung der Windflügel 27 bei einem Rundlauf, sowie die Führungsorgane 46 vorne und Führungsorgane 48 hinten. Nur wenn die Arretierung 26 freigeschaltet ist, kann die Flugstellung verändert werden. Um die richtige Stellung der Windflügel 27 zu erreichen, werden auch die Führungsschienen 47 mit Hilfe der Führungsgleiter 45 vorne, sowie die Führungsschiene 49 mit Hilfe der Führungsgleiter 45 hinten, benötig. Der Pfeil 50 zeigt die Windrichtung an.

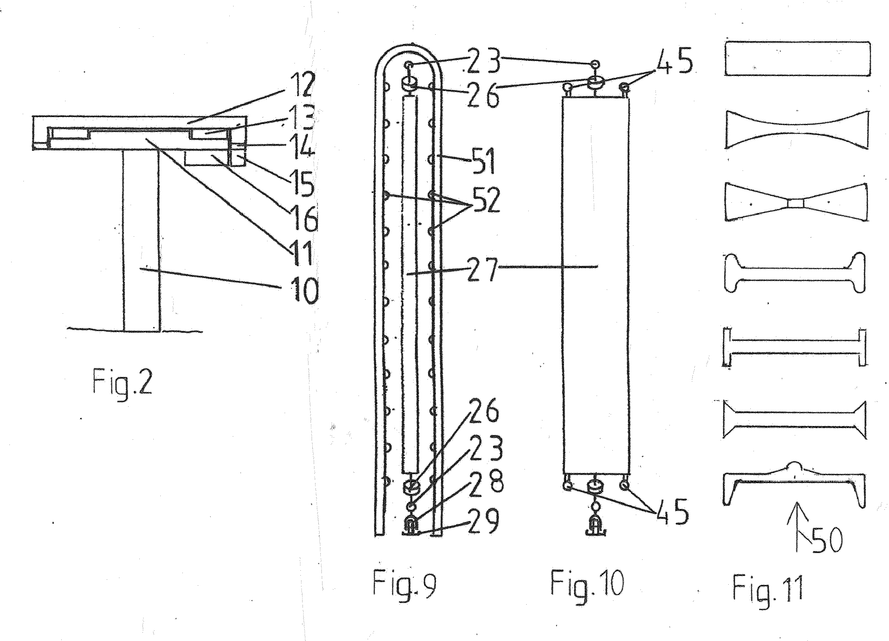

Fig. 11 zeigt einige mögliche Profile der Windflügel 27 von oben, wobei die ersten sechs auf beiden Seiten gleich sind. Das ist deshalb, weil nach jedem Umlauf die Seite gewechselt wird. Nur die Sieben ist nicht für einen Wechsel vorgesehen. Sollte kein Wechsel stattfinden, so können auch die Anderen sechs, nach einseitigem Umbau, verwendet werden.
Zum Abbremsen des Zugorgans mit den Windflügeln sind auf allen vier Umlenkscheiben 24, Scheibenbremsen vorgesehen.

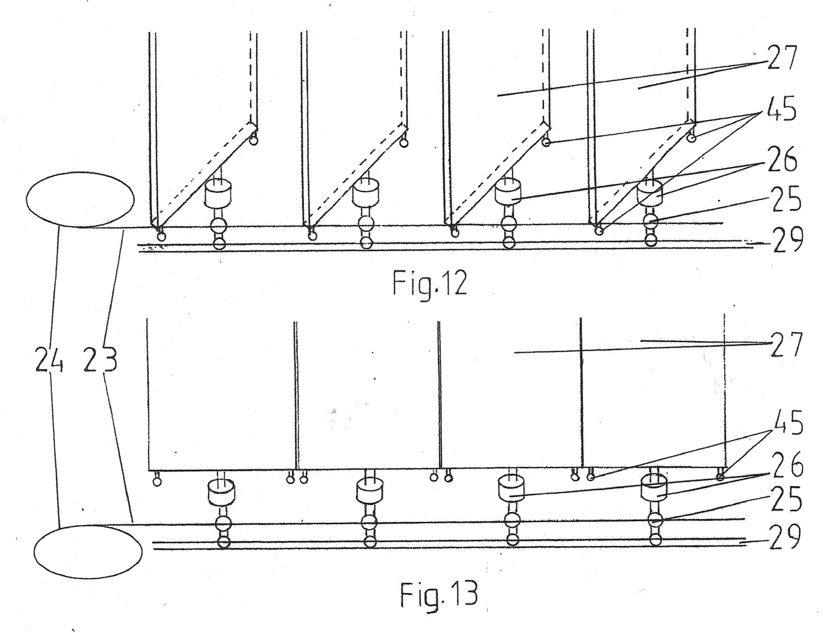

Fig. 12 zeigt Windflügel 27 auf Zugorgan 23 mit Umlenkscheiben 24, in den Wind gestellt, mit Arretierungsgehäuse 26, Klemmung 25, Führungsgleiter 45 und Laufschiene 29 mit drehbarem Stützrad 28.
Fig. 13 zeigt Windflügel 27 auf Zugorgan 23 mit Umlenkscheiben 24, auf der Rückseite oder im Lee und nach dem Zugorgan 23 ausgerichtet.
Der Abschaltmechanismus besteht aus einem "NOT AUS" Taster, Strommessgerät, Windgeschwindigkeitsmessung durch ein Anemometer, mechanisch durch eine Windklappe und ferngesteuert per Telefon. Der sollte so vor sich gehen: Zuerst wird vorne die Entriegelung durch die Führungsorgane 46 und die Führung durch die Führungsschiene 47 aufgehoben, nun bleiben die Windflügel 27 wie hinten, auch vorne nach dem Zugorgan 23 ausgerichtet. Kommt nun der erste Windflügel 27 so nach hinten, so wird auch hier, durch die Führungsgleiter 45 die Entriegelung 48 und Führung 49 aufgehoben. Nun erfolgt die Abbremsung, der mit Windflügel 27 bestückten Zugorgane 23". Nun werden die Zugorgane 23 in die Windrichtung gestellt.
Eine Vereisung der Windflügel 27 soll durch diese Sprühanlage verhindert werden. Sie besteht aus einem gebogenen Rohr 51 mit feinen Düsen 52, um beide Seiten mit Frostschutz zu besprühen.
Das menschliche Auge hat drei Rezeptorentypen. Die Vögel haben vier Rezeptorentypen und daher auch eine bessere Farbunterscheidung. Daher kann es lebenswichtig für sie sein, Spektralfarben erzeugende Bänder, seitlich auf den Windflügeln 27, wenn nötig auch vorne und hinten, anzubringen.
Für den Blitzschutz 22 und Erdung sind auch die landesüblichen Vorschriften zu beachten.

## Patentansprüche

1. Windkraftmaschine mit vertikal stehenden Flügeln (27) und einem im Boden verankerten Sockel, an dem ein Basisaufbau (6) um eine vertikale Achse drehbar und dem Wind nachführbar gelagert ist, wobei an der Oberseite des Basisaufbaus (6) zwei Umlenkscheiben (24) für ein flexibles Zugorgan (23) angebracht sind und wobei parallel zum Basisaufbau (6) ein spiegelbildlich aufgebauter Deckaufbau (17), ebenfalls mit Umlenkscheiben (24) und Zugorgan (23), angeordnet ist, und wobei zwischen den Zugorganen (23) und mit diesen verbunden, um vertikale Achsen verstellbare Windflügel (27) vorgesehen sind, wobei die Winkelstellung jedes Windflügels (27) über in Führungsschienen (47, 49) bewegte Führungsgleiter (45) gesteuert ist, **dadurch gekennzeichnet, dass** die Windflügel (27) bezüglich ihrer Winkelstellung im Bereich der geraden Erstreckung der Zugorgane (23) zwischen den Umlenkscheiben (24) durch einen über die Führungsgleiter (45) gesteuerten Arretierungsmechanismus fixiert und im Bereich der Umlenkscheiben (24) verstellbar sind.

2. Windkraftmaschine nach Anspruch 1, **dadurch gekennzeichnet, dass** jeder Arretierungsmechanismus jeweils ein an dem Zugorgan (23) befestigtes Arretierungsgehäuse (26), einen in dem Arretierungsgehäuse (26) fest angeordneten Zahnkranz (32), am Außenumfang des Arretierungsgehäuses (26) fest angeordnete Räder (30), einen im Arretierungsgehäuse (26) vertikal verschiebbaren Zahnkranz (33) und ein im Arretierungsgehäuse (26) vertikal verschiebbares Entriegelungsrohr (35) mit nach außen stehenden Entriegelungsrädern (31) aufweist.

3. Windkraftmaschine nach Anspruch 2, **dadurch gekennzeichnet, dass** zwischen dem Entriegelungsrohr (35) und dem verschiebbaren Zahnkranz (33) ein Nadellager (36) vorgesehen ist und unterhalb des verschiebbaren Zahnkranzes (33) ein Federpaket (37) angeordnet ist, das den verschiebbaren Zahnkranz (33) in Richtung zum feststehenden Zahnkranz (32) beaufschlagt.

4. Windkraftmaschine nach Anspruch 3, **dadurch gekennzeichnet, dass** im Bereich der Umlenkscheiben (24) zwischen die fest angeordneten Räder (30) und die verschiebbar angeordneten Entriegelungsräder (31) in Eingriff bringbare Führungsorgane (46,48) vorgesehen sind, dass dadurch die Entriegelungsräder (31) im Sinne des Außer-Eingriff-Bewegens des verschiebbaren Zahnkranzes (33) verschoben werden, wodurch die Winkelstellung der nunmehr frei drehbaren Windflügel (27) durch ein Zusammenwirken von Führungsgleitern (45) und Führungsschienen (47,49) veränderbar ist.

5. Windkraftmaschine nach einem der Ansprüche 1 bis 4, **dadurch gekennzeichnet, dass** je Windflügel (27) am unteren Ende und am oberen Ende ein Arretierungsmechanismus angeordnet ist, welche spiegelbildlich gegengleich ausgebildet sind.

6. Windkraftmaschine nach Anspruch 5, **dadurch gekennzeichnet, dass** am unteren Ende der Windflügel (27) zusätzlich noch ein Stützrad (28) vorgesehen ist, das in einer U-Profilschiene (29) läuft.

7. Windkraftmaschine nach einem der Ansprüche 1 bis 6, **dadurch gekennzeichnet, dass** an allen vier Umlenkscheiben (24) Scheibenbremsen vorgesehen sind.

8. Windkraftmaschine nach einem der Ansprüche 1 bis 7, **dadurch gekennzeichnet, dass** eine Sprühvorrichtung mit Düsen (52) zum Besprühen der Windflügel (27), z.B. mit Frostschutzmittel, vorgesehen ist (Fig. 9).

9. Windkraftmaschine nach einem der Ansprüche 1 bis 8, **dadurch gekennzeichnet, dass** an den Windflügeln (27) Spektralfarben erzeugende Bänder angebracht sind.
